# EUROPEAN PATENT APPLICATION

(11) **EP 1 775 973 A2**
(43) Date of publication of application: **18.04.2007**
(21) Application number: 05425840.5
(22) Date of filing: 25.11.2005
(51) Int. Cl.: H04Q 7/30

(54) **Field extensor - repeater for GSM cellular telephone**

(30) Priority: 13.10.2005 IT PN20050029 U
(71) Applicant: Microset, 33077 Sacile, PN (IT)
(72) Inventor: Gattel, Bruno, 33077 Sacile - Pordenone (IT)

(57) **Abstract**

Field extensor - repeater for GSM cellular telephone on bands 1700-1880MHz, UMTS band 1900-2170 MHz, radio LAN 2,4 GHz band, cordless DECT 1.7GHz band and CT1-CT1 plus.
Useful from outside where the signal is present to inside where the signal is not enough for telephone operation, as houses, buildings, hotels, tunnel, undergrounds, commercial centres, industrial plats, resort, valley and country side.

## Description

The cellular telephone repeater operates in 900 and / or 1800MHz bands, UMTS telephone, DECT, CTI and CT1 Plus and Radio LAN. It is useful to extend the signal where the signal is physically blocked. It can extend the signal from outside to the inside of houses, buildings, hotels, tunnel, undergrounds, commercial centres, industrial plants, etc.

The repeater has three main parts:
A) Linear power preamplifier for up-down link;
B) Low noise linear antenna preamplifier for down-link intermodulation;
C) Antenna detector for the connection with cellular or cordless telephone, without any electrical and physical connection - no modification is required.

It can use one or more antennas for receiving and transmitting the signal.

The repeater has built-in band pass filters on both side and all circuital parts are shielded from perturbations and from interferences.

Power by battery, solar panel or power supply 110-230VAC.

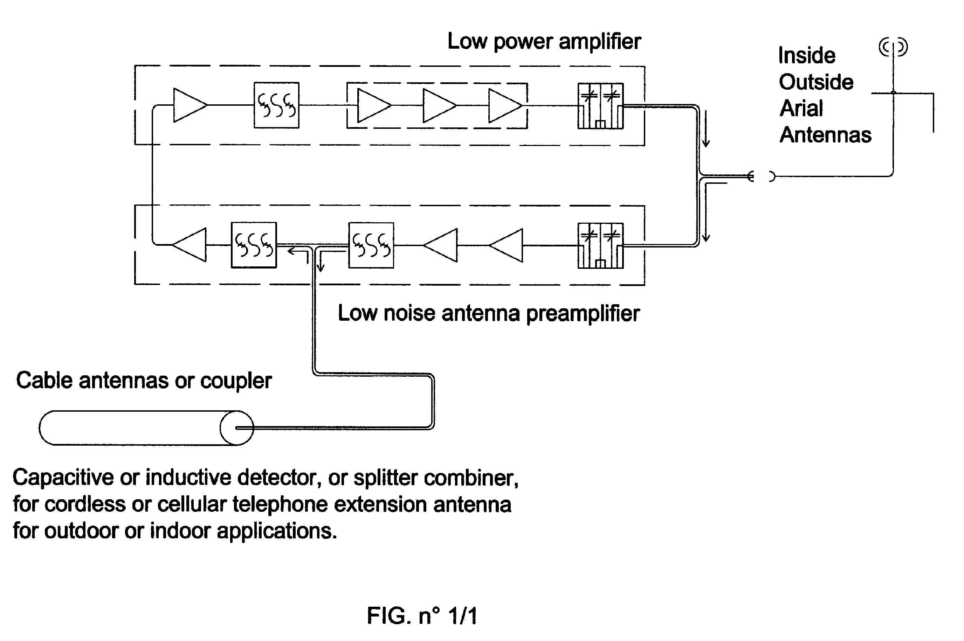

## Claims

1. This patent is the technological evolution of Microset patent n°01282834 - requested the 10^{th} of July 1995, n°37 - approved by the Italian Patent Office of Ministry of Industry the 12^{th} of March 1998, and extension of the 13^{th} October 2005 demand n. PN2005U000029.

2. The main innovations of the patent, as claimed in CLAIM 1, is **characterized by** operating field extension for cordless telephone and cellular GSM telephone equipment on 1700-1800MHz band, UMTS system, video telephone equipment and radio LAN on 2,4GHz band, without any physical connection (on air) but by a special coupler.

3. It provides low power output at the telephone handset, reducing the harmful effects to human body and to the brain. The operating frequencies of cellular telephone equipment are on microwave band, very similar to the frequency used by microwave oven.

4. It extends the signal for cordless and cellular telephones also where is not operating, avoiding interruptions to the communications.
